**Europäisches Patentamt**

**European Patent Office**

**Office européen des brevets**

(19)

(11) Veröffentlichungsnummer: **0 016 389**
**B1**

(12) # EUROPÄISCHE PATENTSCHRIFT

(45) Veröffentlichungstag der Patentschrift:
**18.05.83**

(21) Anmeldenummer: **80101191.7**

(22) Anmeldetag: **10.03.80**

(51) Int. Cl.³: **C 08 L 23/00,** C 08 K 3/26,
C 08 K 3/34, C 08 K 5/00

(54) **Rieselfähige, hochgefüllte Polyolefin-Formmasse, Verfahren zu ihrer Herstellung und ihre Verwendung.**

(30) Priorität: **14.03.79 ES 478625**

(43) Veröffentlichungstag der Anmeldung:
**01.10.80 Patentblatt 80/20**

(45) Bekanntmachung des Hinweises auf die Patenterteilung:
**18.05.83 Patentblatt 83/20**

(84) Benannte Vertragsstaaten:
**AT BE CH DE FR GB IT NL SE**

(56) Entgegenhaltungen:
**FR-A-2 253 784**

(73) Patentinhaber: **HOECHST AKTIENGESELLSCHAFT,
Postfach 80 03 20, D-6230 Frankfurt/Main 80 (DE)**

(72) Erfinder: **Jones, Barry Michael, Loreleistrasse 18,
D-6230 Frankfurt am Main 80 (DE)**

Rieselfähige, hochgefüllte Polyolefin-Formmasse, Verfahren zu ihrer Herstellung und ihre Verwendung.

Die Erfindung betrifft rieselfähige, hochgefüllte Polyolefin-Formmassen, die sich ohne Schwierigkeiten spritzgiessen oder extrudieren lassen.

Der Zusatz von Füllstoffen zu Polyolefinen ist schon lange üblich. Je nach der Art des Füllstoffes erhält man dadurch eine Verbesserung bestimmter Eigenschaften oder eine Verbilligung der Polyolefin-Formmasse und der daraus hergestellten Gegenstände.

In neuerer Zeit ist man dazu übergegangen, Polyolefine direkt aus dem Pulver durch Spritzguss oder Extrusion zu verarbeiten, um den Arbeitsgang der Granulierung zu sparen. Dabei ist eine gute Rieselfähigkeit der verarbeitungsfertigen Formmasse unbedingt erforderlich, da andernfalls keine gleichmässige Füllung der Verarbeitungsmaschine gewährleistet ist.

Für viele Anwendungen ist ein hoher Zusatz verbilligender Füllstoffe zu Polyolefinen erwünscht, da sonst Polyolefin-Formmasse trotz ihrer guten Eigenschaften aus Preisgründen nicht zum Einsatz kommen. Billige Füllstoffe sind z.B. Kreide und Talk. Es hat sich aber gezeigt, dass bei Zusätzen über 20 Gew.-% die Formmasse nicht mehr ausreichend rieselfähig sind. Durch Brückenbildung in der Einzugszone tritt eine unregelmässige Förderung auf, die eine zufriedenstellende Verarbeitung unmöglich macht. Bei Einsatz des ebenfalls billigen Holzmehls kann maximal 30% zugesetzt werden, da durch das Holzmehl die Viskosität der Mischung ansteigt und die dadurch erforderliche Erhöhung der Verarbeitungstemperatur zur Verbrennungen des Holzmehls führt.

Somit bestand ein Bedürfnis für hochgefüllte, rieselfähige Polyolefin-Formmasse.

Es wurde nun gefunden, dass bei Verwendung einer Mischung von Holzmehl plus Kreide oder Talk hohe Gehalte an Füllstoffen erreicht werden können.

Gegenstand der Erfindung ist somit die in den Ansprüchen genannte Polyolefin-Formmasse, ihre Herstellung und Verwendung.

Die erfindungsgemässe rieselfähige hochgefüllte Polyolefin-Frommasse besteht aus 40 bis 60, vorzugsweise 45 bis 55 Gew.-% Polyolefinpulver und 60 bis 40, vorzugsweise 55 bis 45 Gew.-% einer Füllstoff-Mischung, die wiederum aus 30 bis 75, vorzugsweise 40 bis 60 Gew.-Teilen Holzmehl mit einer Korngrösse von 200 bis 700 µm und 70 bis 25, vorzugsweise 60 bis 40 Gew.-Teilen Kreide oder Talk besteht.

Diese Formmasse rieselt gut und kann sogar bei niedrigeren Temperaturen verarbeitet werden als das reine Polyolefin, so dass keine Verbrennungen auftreten. Gegenüber reinen Polyolefinen hat die erfindungsgemässe Formmasse den Vorteil, dass sie schwindungsarm und verzugsfrei ist, keine Einfallstellen ergibt und in schnellerem Zyklus verarbeitet werden kann.

Für die erfindungsgemässe Formmasse eignen sich Polyäthylen hoher, mittlerer und niederer Dichte sowie Polypropylen. Auch kristalline Mischpolymerisate von Äthylen mit bis zu 15 Gew.-% Propylen oder von Propylen mit bis zu 15 Gew.-% Äthylen, ferner Mischpolymerisate von Äthylen oder Propylen mit bis zu 15 Gew.-% eines höheren 1-Olefins, wie beispielsweise Buten-1 oder Hexen-1 oder bis zu 5 Gew.-% anderer copolymerisierbarer Monomerer, wie beispielsweise Acrylate oder Vinylverbindungen, sowie Mischungen, die überwiegend diese Mischpolymerisate enthalten, können eingesetzt werden.

Bevorzugt verwendet werden Polypropylen oder Mischungen von Polypropylen mit 1 bis 5 Gew.-% Polyäthylen mittlerer und niederer Dichte, insbesondere Hochdruckpolyäthylen.

Das zu verwendende Holzmehl hat eine Korngrösse von 200 bis 700, vorzugsweise 300 bis 500 µm. Vorzugsweise wird Kiefernholzmehl eingesetzt. Die Feuchtigkeit des Holzmehls sollte unter 0,4, vorzugsweise unter 0,3 Gew.-% liegen. Als Kreide werden vor allem feinkörnige Typen mit mittleren Teilchendurchmessern zwischen 1 und 5 µm verwendet. Vorzugsweise sollte die Kreide keine groben Teilchen mit Durchmessern über 20 µm, noch besser nicht über 10 µm haben. Der zu verwendende Talk sollte eine mittlere Teilchengrösse von 1 bis 50, vorzugsweise von 5 bis 40 µm haben.

Neben den Füllstoffen enthält die erfindungsgemässe Formmasse die üblichen Polyolefin-Stabilisatoren, beispielsweise Phenole und/oder sulfidische Verbindungen, ausserdem gegebenenfalls Farbpigmente, Gleitmittel, Lichtschutzmittel, Flammschutzmittel usw.

Die erfindungsgemässe Formmasse kann direkt durch Spritzgiessen oder Extrusion verarbeitet werden. Extrudierte Platten lassen sich ausgezeichnet tiefziehen. Die hochgefüllte, preiswerte Formmasse wird vor allem dort eingesetzt, wo die reinen Polyolefine zu teuer sind, z.B. für Einweg-Obst- und Gemüsesteigen. Sie eignet sich aber auch für andere Spritzgussteile, wie beispielsweise Teile für den Fahrgastraum von Kraftfahrzeugen, z.B. Ablagen, Armaturenbretter, Schalttafeln, Griffe oder Knöpfe oder für relativ dicke Spritzgussteile wie z.B. Toilettensitze und -deckel oder Kleinteile wie Wäscheklammern.

Beispiel 1

In einem Mischer werden 30 Gew.-Teile Kiefernholzmehl mit einer mittleren Korngrösse von 350 µm und einem Feuchtigkeitsgehalt unter 0,4 Gew.-% mit 20 Gew.-Teilen Kreide einer mittleren Korngrösse von 3 µm, die keine Teilchen mit Durchmessern über 10 µm enthält, mit 25 Gew.-Teilen eines Polypropylens mit einem Schmelzindex MFI 230/5 (bestimmt nach DIN 53 735) von 1,5 g/10 min und 25 Gew.-Teilen eines Poylpropylens mit einem Schmelzindex MFI 230/5 von 12 g/10 min gemischt. Zur Stabilisierung und als Gleitmittel werden 0,2 Gew.-% n-Octadecyl-β-(4'-hydroxy-3',5'-di-tert.butylphenyl)-propionat und 0,2 Gew.-% Calciumstearat, jeweils bezogen auf die Mischung, zugesetzt.

Die Masse wird auf einer Spritzgiessmaschine zu Toilettensitzdeckeln von 2 kg Gewicht verspritzt. Die ersten Versuche werden mit dem bei Polypropylen üblichen Temperaturprogramm von 200 °C in der Einfüllzone, 215 °C in der Plastifizierzone und 230 °C an der Düse durchgeführt. Die Spritzgussteile haben eine schlechte Oberfläche und leichte Verbrennungen. Darauf wird die Temperatur zurückgenommen. Mit einem Temperaturprogramm von 170/175/185 °C können ausgezeichnete Spritzgussteile mit glatter Oberfläche und ohne Verbrennungen hergestellt werden. Die Masse ist sehr gut rieselfähig und lässt sich ohne Schwierigkeiten verarbeiten. Auch nach durchgehender achtstündiger Verarbeitung sind keine Ablagerungen an der Schnecke oder Düse festzustellen. Infolge der niedrigen Verarbeitungstemperatur besteht keine Verbrennungsgefahr für das Holzmehl und der Spritzzyklus kann von 8 Minuten (beim reinen Polypropylen) auf 3 Minuten verkürzt werden.

Beispiel 1 bis 5

Entsprechend Beispiel 1 werden die aus der Tabelle ersichtlichen Massen stabilisiert und verarbeitet.

| Beispiel | | 2 | 3 | 4 | 5 |
|---|---|---|---|---|---|
| Polypropylen, MFI 2,5 g/10 min | Gew.-T. | 50 | 55 | 43 | 55 |
| Hochdruckpolyäthylen | Gew.-T. | – | – | 2 | – |
| Kiefernholzmehl | | | | | |
| mittl. Korngrösse 650 µm | Gew.-T. | 25 | 25 | 35 | 30 |
| Kreide, mittl. Korngrösse 2 µm | Gew.-T. | – | – | 20 | 15 |
| Talk, mittl. Korngrösse 10 µm | Gew.-T. | 25 | 20 | – | – |

Alle Massen sind sehr gut rieselfähig und lassen sich ohne Schwierigkeiten mit dem gleichen Temperaturprogramm wie in Beispiel 1 (170/175/185 °C) zu Spritzgussteilen mit glatter Oberfläche und ohne Einfallstellen verarbeiten.

**Patentansprüche**

1. Rieselfähige hochgefüllte Polyolefin-Formmasse bestehend aus 40 bis 60 Gew.-% Polyolefinpulver und 60 bis 40 Gew.-% einer Füllstoff-Mischung aus 30 bis 75 Gew.-Teilen Holzmehl mit einer Korngrösse von 200 bis 700 µm und 70 bis 25 Gew.-Teilen Kreide oder Talk.

2. Polyolefin-Formmasse gemäss Anspruch 1, bestehend aus 45 bis 55 Gew.-% Polyolefinpulver und 55 bis 45 Gew.-% der Füllstoff-Mischung.

3. Polyolefin-Formmasse gemäss Ansprüchen 1 und 2, dadurch gekennzeichnet, dass die Füllstoff-Mischung aus 40 bis 60 Gew.-Teilen Holzmehl und 60 bis 40 Gew.-Teilen Kreide oder Talk besteht.

4. Polyolefin-Formmasse gemäss Ansprüchen 1 bis 3, dadurch gekennzeichnet, dass sie als Polyolefin Polypropylen enthält.

5. Polyolefin-Formmasse gemäss Ansprüchen 1 bis 4, dadurch gekennzeichnet, dass sie als Holzmehl Kiefernholzmehl enthält.

6. Verwendung der Polyolefin-Formmasse gemäss Ansprüchen 1 bis 5 für den Spritzguss.

7. Verfahren zur Herstellung einer rieselfähigen Polyolefin-Formmasse, welche aus 40 bis 60 Gew.-% Polyolefinpulver und 60 bis 40 Gew.-% eines Füllstoffs besteht, durch Mischen der Bestandteile, dadurch gekennzeichnet, dass man als Füllstoff ein Gemisch aus 30 bis 75 Gew.-Teilen Holzmehl mit einer Korngrösse von 200 bis 700 µm und 70 bis 25 Gew.-Teilen Kreide oder Talk verwendet.

8. Verfahren gemäss Anspruch 7, dadurch gekennzeichnet, dass man als Füllstoff eine Mischung aus 40 bis 60 Gew.-Teilen Holzmehl und 60 bis 40 Gew.-Teilen Kreide oder Talk verwendet.

9. Verfahren gemäss Anspruch 7, dadurch gekennzeichnet, dass man als Polyolefin Polypropylen verwendet.

10. Verfahren gemäss Ansprüchen 7 bis 9, dadurch gekennzeichnet, dass man als Holzmehl Kiefernholzmehl verwendet.

**Claims**

1. Free-flowing polyolefin molding composition having a high filler content and containing from 40 to 60% by weight of polyolefin powder and from 60 to 40% by weight of a filler mixture of from 30 to 75 parts by weight of wood flour having a particle size of from 200 to 700 µm and from 70 to 25 parts by weight of chalk or talc.

2. Polyolefin molding composition as claimed in claim 1, which contains from 45 to 55% by weight of polyolefin powder and from 55 to 45% by weight of the filler mixture.

3. Polyolefin molding composition as claimed in claims 1 and 2, wherein the filler mixture contains from 40 to 60 parts by wight of wood flour and from 60 to 40 parts by weight of chalk or talc.

4. Polyolefin molding composition as claimed in claims 1 to 3, which contains polypropylene as polyolefin.

5. Polyolefin molding composition as claimed in claims 1 to 4, which contains as wood flour pine wood flour.

6. Use of the polyolefin molding composition as claimed in claims 1 to 5 for injection molding.

7. Process for the manufacture of a free-flowing polyolefin molding composition containing from 40 to 60% by weight of polyolefin powder and from 60 to 40% by weight of a filler by mixing the components, which comprises using as filler a mixture of from 30 to 75 parts by weight of wood flour having a particle size of from 200 to 700 µm and from 70 to 25 parts by weight of chalk or talc.

8. Process as claimed in claim 7, which comprises using as filler a mixture of from 40 to 60 parts by weight of wood flour and from 60 to 40 parts by weight of chalk or talc.

9. Process as claimed in claim 7, which comprises using polypropylene as polyolefin.

10. Process as claimed in claims 7 to 9, which comprises using as wood flour pine wood flour.

**Revendications**

1. Matière à mouler à base d'une polyoléfine, ayant une bonne fluence et une haute teneur en charges, matière qui est constituée de 40 à 60% en poids d'une polyoléfine pulvérulente et de 60 à 40% en poids d'un mélange de charges, lui-même constitué de 30 à 75 parties en poids de farine de bois d'une granularité de 200 à 700 µm et de 70 à 25 parties en poids de craie ou de talc.

2. Matière à mouler à base d'une polyoléfine selon la revendication 1, matière qui est constituée de 45 à 55% en poids d'une polyoléfine pulvérulente et de 55 à 45% en poids du mélange de charges.

3. Matière à mouler à base d'une polyoléfine selon l'une des revendications 1 et 2, matière caractérisée en ce que le mélange de charges est constitué de 40 à 60 parties en poids de farine de bois et de 60 à 40 parties en poids de craie ou de talc.

4. Matière à mouler à base d'une polyoléfine selon l'une quelconque des revendications 1 à 3, caractérisée en ce qu'elle contient du polypropylène comme polyoléfine.

5. Matière à mouler à base d'une polyoléfine selon l'une quelconque des revendications 1 à 4, caractérisée en ce qu'elle contient, comme farine de bois, de la farine de bois de pin.

6. Application de la matière à mouler à base d'une polyoléfine selon l'une quelconque des revendications 1 à 5, pour le moulage par injection.

7. Procédé de préparation d'une matière à mouler polyoléfinique fluente, constituée de 40 à 60% en poids d'une poudre de polyoléfine et de 60 à 40% en poids d'une charge, par mélangeage des constituants, procédé caractérisé en ce qu'on utilise, comme charge, un mélange de 30 à 75 parties en poids de farine de bois d'une granularité de 100 à 700 µm et de 70 à 25 parties en poids de craie ou de talc.

8. Procédé selon la revendication 7, caractérisé en ce qu'on utilise, comme charge, un mélange de 40 à 60 parties en poids de farine de bois et de 60 à 40 parties en poids de craie ou de talc.

9. Procédé selon la revendication 7, caractérisé en ce qu'on utilise du polypropylène comme polyoléfine.

10. Procédé selon l'une quelconque des revendications 7 à 9, caractérisé en ce qu'on utilise, comme farine de bois, de la farine de bois de pin.